# EUROPEAN PATENT APPLICATION

(11) **EP 1 767 102 A1**
(43) Date of publication of application: **28.03.2007**
(21) Application number: 05743480.5
(22) Date of filing: 30.05.2005
(51) Int. Cl.: A23L 1/325

(54) **MATERIAL OF MEAT HAVING BEEN SUBJECTED TO MINCING, SEASONING AND HEATING WHICH IS OBTAINED FROM FISHMEAT BUT TASTES THAT FROM MEAT OF LIVESTOCK, AND PROCESS FOR PRODUCING THE SAME**

(30) Priority: 01.06.2004 JP 2004162747
(71) Applicant: NIPPON SUISAN KAISHA, LTD., Tokyo 100-8686 (JP)
(72) Inventor: MIZUGUCHI, Toru, c/o Nippon Suisan Kaisha, Ltd., Hachioji-shi, Tokyo 1920906 (JP); ONO, Kenji, c/o Nippon Suisan Kaisha, Ltd., Hachioji-shi, Tokyo 1920906 (JP); SAMEJIMA, Futoshi, c/o Nippon Suisan Kaisha, Ltd., Hachioji-shi, Tokyo 1920906 (JP); KORIYAMA, Tsuyoshi, c/o Nippon Suisan Kaisha, Ltd., Chiyoda-ku, Tokyo 1008686 (JP); YOSHII, Kouichi, c/o Nippon Suisan Kaisha, Ltd., 2-chome, Chiyoda-ku, Tokyo 1008686 (JP); MIKURIYA, Takahiro, c/o Nippon Suisan Kaisha, Ltd., 2-chome, Chiyoda-ku, Tokyo 1008686 (JP)
(74) Representative: HOFFMANN EITLE
(86) International application number: PCT/JP2005/009883
(87) International publication number: WO 2005/117614

(57) **Abstract**

To provide minced and heated fish meat material having a texture like meat of livestock, and foods utilizing the material. Fish meat, preferably fish meat wherein the decomposition of trimethylamine N-oxide is inhibited and the denaturation of protein is reduced, is chopped while keeping a frozen state, is heated until denaturation and coagulation of protein while keeping a frozen state and followed by seasoning. Alternatively, the seasoning is carried out simultaneously with the heating. According to the procedure, minced and heated fish meat material having a texture like meat of livestock, can be obtained. The material can be provided as it is, or can be provided as an ingredient of food produced from minced meat of livestock.

## Description

### TECHNICAL FIELD

The present invention relates to a minced and heated fish meat material having a texture like meat of livestock, a food utilizing it as a raw material, and a process for producing the minced and heated fish meat material having a texture like meat of livestock.

### BACKGROUND ART

*"Soboro"* of meat of livestock is obtained by heating and seasoning meat of livestock in the state of minced meat, and is widely and generally eaten. For example, it is consumed by putting on top of cooked rice as it is, or it is mixed in a material for a croquette. On the other hand, fish meat becomes a flaky material when heated, or when further agitated, becomes a fine fibrous state, thereby forming a food called *"dembu"*, which has a different food texture from that of *"soboro"* of meat of livestock.

In the case of preparing a minced and heated material from fish meat, the kind of fish is limited to one having hard tissues, and its processing is also very troublesome. Even when it is processed similar to that for the meat of livestock, the food texture becomes dry feel of eating, lacking the granular feel. Therefore, when *surimi* is used, it has been necessary to add salt and to execute an elasticizing process (patent reference 1). When soft fish meat is used, it has been necessary to add a gelling agent (patent reference 2).
Patent reference 1: JP-A-2001-54371
Patent reference 2: JP-A-8-23928.

### DISCLOSURE OF INVENTION

### Problems to be Solved by Invention

The present invention provides a minced and heated material produced from a common fish meat material such as *surimi* (water-washed, dehydrated and cryoprotectants added fish meat paste), minced fish meat (*"otoshimi"*), or fillet, which has granular feel as in minced meat of livestock, and a simple process for producing it.

### Means for Solving the Problems

The present invention relates to a minced and heated fish meat material having a texture like meat of livestock, in which frozen fish meat is chopped or crushed fine-grainedly while keeping a frozen state and the fish meat in a frozen state is heated until a protein is denatured and coagulated. Also, a seasoned, minced and heated fish meat material can be obtained by carrying out seasoning simultaneously with the heating. The frozen fish meat in the present invention is preferably *surimi* or minced fish meat, and particularly, frozen fish meat wherein decomposition of trimethylamine N-oxide is suppressed and denaturation of a protein is reduced is preferred. Particularly preferred is minced fish meat wherein decomposition of trimethylamine N-oxide(TMAO) is suppressed by agitation with addition of sugar.

The present invention relates to a processed food produced with a minced and heated fish meat material having a texture like meat of livestock, in which frozen fish meat is chopped or crushed fine-grainedly while keeping a frozen state, and the fish meat in a frozen state is heated until a protein is denatured and coagulated, or with a seasoned, minced and heated material having a texture like meat of livestock, which is obtained by carrying out seasoning simultaneously with the heating.

The present invention relates to a process for producing a minced and heated fish meat material having a texture like meat of livestock, which comprises chopping or crushing frozen fish meat fine-grainedly while keeping a frozen state, and heating the fish meat in a frozen state until a protein is denatured and coagulated. Furthermore, a seasoned, minced and heated fish meat material having a texture like meat of livestock can be produced by carrying out seasoning simultaneously with the heating.

In order to obtain a granular feel, by carrying out chopping or crushing in a frozen state, followed by heating in a frozen state, fish meat is kept in a granular state, and a material having a texture like meat of livestock is obtained.

### EFFECT OF THE INVENTION

The minced and heated fish meat obtainable by the present invention has a texture like meat of livestock and has little fish odor, and is able to be eaten easily by those who do not like fish meat. Also, since the raw material is fish meat, there can be provided a material allowing to take in nutritious elements, such as proteins and lipids, derived from fish meat, which are considered to be good for the health.

Also, a material, wherein oil and fats and flavorings permeate uniformly in the meat granules, and quality is uniform is able to obtained by the method for producing of the present invention in a high yield. Since it can be produced in a very simple process, a special apparatus is not required. Since this material is prepared in a simple process and does not require particular additives or the like, safe and inexpensive foods such as hamburger steak, meat ball, croquette, fish ball, *shaomai* or *chiaotzu* can be provided.

### BEST MODE FOR CARRYING OUT THE INVENTION

For the fish meat as the raw material of the present invention, any fish meat can be employed such as *surimi* or fillet. From *surimi,* from which the water-soluble proteins are removed, a minced and heated material with little fish odor can be obtained. Additionally, minced fish meat (non-water-washed fish meat) wherein decomposition of trimethylamine N-oxide is suppressed and denaturation of a protein is reduced is preferable since it has a good taste and food texture, and little unpleasant fish odor. The decomposition of trimethylamine N-oxide in minced fish meat is suppressed and the denaturation of protein is reduced, for example, by addition of sugar and agitation. Since such minced fish meat is richer in water-soluble proteins and salt-soluble proteins than the *surimi,* it is superior in a water-holding property and an oil-holding property. Therefore, it is superior in holding properties for oil and fats and for seasoning material, and in the yield. An example of the minced fish meat, wherein the decomposition of trimethylamine N-oxide is suppressed and the denaturation of protein is reduced, includes "a non-water-washed or water-washed at low level fish meat from a raw material minced fish meat or the dehydrated minced fish meat, to which are added one or more cryoprotectants and where the decomposition of trimethylamine N-oxide is suppressed trough oxidation caused by agitation, such as fish meat wherein the decomposition of trimethylamine N-oxide is suppressed by adding sugar and preferably *mirin* (sweet sake for seasoning) to minced fish meat, and by executing agitation", as described in WO 03/013280. More specifically, frozen fish meat obtained from skinless fillet, by carrying out meat separation, dehydration, addition of sugar (or sugar alcohol), agitation and freezing.

Examples of sugar or sugar alcohol used in the present invention include sucrose, sorbitol, trahalose, glucose, xylitol, mannitol, xylose, sorbitan, fructose, and maltose. Sugar or sugar alcohol is added in an amount from 1 to 20 parts by weight, preferably from 5 to 15 parts by weight, based on 100 parts by weight of the fish meat.

In the conventional manufacture of frozen *surimi,* agitation is carried out when sugar or a polymerized phosphate salt is added. However, such agitation is carried out merely for uniformly blending the sub materials. In order to suppress the decomposition of TMAO by oxidation, in the case of a silent cutter, a sufficient effect can be obtained by agitating the fish meat for from 5 to 30 minutes, preferably from 5 to 20 minutes, under an oxygen-containing gas. The agitation time is regulated according to the performance and the magnitude of the agitating apparatus. Since the heat generated in the agitation may have an unfavorable effect on the fish meat, the agitation is preferably carried out under cooling, if necessary. Oxidation can be also achieved by various methods, such as agitation with a hi-kneader or an apparatus for continuous agitation, or agitation under blowing by an oxygen-containing gas or with an addition of an oxygen generating agent or an oxidant.

Such fish meat, which is rapidly frozen by an air blast freezer, a contact freezer or a brine freezer, and stored, is used as the raw material of the present invention. For crushing the frozen fish meat, a chopper, a meat separator, a crusher or a silent cutter is used for chopping or crushing it to be fine granules. A size of the granules is regulated to be a granular size which matches the purpose of use. For ordinary purposes of use, chopping or crushing to a size of about from 2 to 10 mm is preferable.

In the invention, the term "keeping a frozen state" or "in a frozen state" means such freezing that the fish meat can maintain a solid state, and is not necessarily such a hard frozen state that it is difficult to chop or crush it. Rather, slight thawing may be carried out so as to facilitate the chopping and the like. The freezing is only required to be in such an extent that the granules of the chopped or crushed fish meat do not integrally stick together and remain independent until the protein is denatured and coagulated in the next heating treatment.

The crushed fish meat is heated until the protein is denatured and coagulated by the heat in a frozen state before thawing. The fish meat is generally heated until the fish meat reaches a temperature of about 70°C or higher. For heating, a steamer or a kneader with a steam jacket may be used. Thus, uniform minced and heated meat which has little fluctuation in the granule size, for example, with a uniform size of 3 to 6 mm, can be obtained. Thawing before heating leads to a mutual adhesion of the meat granules and provides a minced and heated material which has ununiform granule size as large as about from 3 to 30 mm, even by a similar chopping. Since the material once adhered is scarcely broken during the heating, after the heating, a step of reducing the granule size is necessary again.

In the heating, a desired seasoning such as sugar or soy sauce can be added to carry out seasoning simultaneously with the heating.

The seasoned, minced and heated material obtained by the present invention can be consumed as it is or by being put on cooked rice as in a *soboro* lunch box. Also, it may be added into a hamburger steak, a meat ball, a croquette, a fish ball, a shaomai or a chiaotzu as a material to prepare a food having granular feel of meat.

The minced and heated material of the present invention can also be stored in frozen state over a prolonged period.

Examples of the present invention will be shown in the following, but the present invention is not limited to such examples at all.

### EXAMPLES

### Example 1, Example 2 and Comparative Example

Processing of 500 g of a minced frozen Southern blue whiting meat, wherein decomposition of trimethylamine N-oxide was suppressed by agitation with addition of 10 g of sugar,(Example 1) or Alaska pollack *surimi* (Example 2) was carried out by a chopper (hole size: 3 mm) while keeping a frozen state, followed by charging the chop into a frying pan heated with 10 g of oil while keeping a frozen state. Immediately thereafter, flavorings such as Japanese *sake* and ginger were added under agitation, and seasoning was carried out with Japanese pepper and the like when the fish meat reached a temperature of from 70 to 80°C. As a reference, a frozen Southern blue whiting minced fish meat containing 10% of sugar was similarly processed by a chopper after complete thawing, and heated and seasoned.

### Results

In Examples 1 and 2 where products were produced according to the method of the present invention, *soboro* of uniform granule size was able to be obtained (Figs. 1 and 2,), while large blocks generated, and did not become *soboro* of uniform granule size in Comparative Examples (Fig. 3). Also, as a result of sensory evaluation which is based on a 5-point evaluation in view of absolute evaluation assuming livestock meat by a panel of 8 persons, Examples 1 and 2 were evaluated as minced and heated fish meat which has satisfactory feel like meat of livestock in comparison with Comparative Example (Table 1).

In particular, the *soboro* of Example 1 prepared from the minced Southern blue whiting meat where the decomposition of trimethylamine N-oxide is suppressed had little specific fish odor and had a taste and a texture closer to the livestock meat in comparison with the material prepared from ordinary *surimi.* Thus, it was evaluated as more preferable also in the sensory evaluation.

The minced fish meat of Example 1 has a water-holding property and an oil-holding property even without salt grinding in comparison with the *surimi* of Example 2, since the water-soluble protein is not removed, and the salt-soluble protein is contained in a large amount by sufficient agitation with sugar addition. As a result, the *soboro* of the present invention was superior in permeation of seasoning and a high yield.

**[Table 1]**

| | Example 1 Minced Southern blue whiting meat | Example 2 Alaska pollack *surimi* | Comparative Example thawed minced Southern blue whiting meat |
|---|---|---|---|
| feel of rough grind | 4.2 ± 0.2 | 4.0 ± 0.3 | 3.1 ± 0.3 |
| elasticity | 4.1 ± 0.3 | 4.0 ± 0.5 | 2.2 ± 0.5 |
| preference for taste and flavor | 4.5 ± 0.2 | 3.5 ± 0.3 | 2.1 ± 0.5 |
| preference for texture | 4.6 ± 0.5 | 3.1 ± 0.5 | 1.8 ± 0.6 |
| total evaluation | 4.5 ± 0.6 | 4.0 ± 0.5 | 1.9 ± 0.6 |

### [Example 3]

Frozen Southern blue whiting minced fish meat containing 10% of sugar was roughly cut by a band saw into a square of about 5 cm, then thawed to an extent that the blade of the silent cutter was not broken (state where the surface was somewhat thawed), followed by chopping with a silent cutter for about 5 to 10 minutes. Such fish meat was charged in a kneader equipped with a heated steam jacket, and was heated and seasoned as in Examples 1 and 2 while keeping a frozen state.

As a result, even using a silent cutter as the crusher, minced and heated fish meat having a texture like the livestock meat was obtained as in Examples 1 and 2 wherein the chopper was used.

### [Example 4]

Frozen Southern blue whiting minced fish meat containing 5% of sugar was half thawed, and chopped with a cutter for 2 to 3 minutes, followed by mixing with salt in an amount of 3% for 2 to 3 minutes. Water, oil, soy sauce, ginger etc. were added to the fish meat under agitation to prepare binding meat. Then, Southern blue frozen whiting minced fish meat containing 5% of sugar was processed in a half-thawed state by a chopper (hole size: 6.5 mm), and steam boiled at 90 to 95°C. Then, the binding meat and the minced and heated fish meat processed by the chopper and steam boiled which were prepared above, were mixed in a proportion of 9:1 to 8:2 and further steam boiled, to obtain a Hamburger steak-like food having fibrous and granular feel.

### INDUSTRIAL APPLICABILITY

A minced and heated material having a texture like meat of livestock, which is prepared from fish meat and free from fish odor can be provided. The material can be produced by a simple process without any particular additives, it is consumable as it is, or is widely usable as a cooking material. Therefore, this material can be utilized for providing various foods.

### BRIEF DESCRIPTION OF THE DRAWINGS

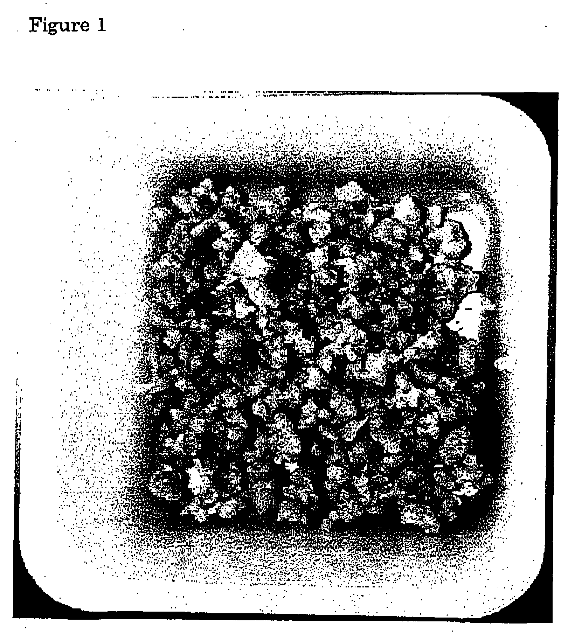

Fig. 1 is a photograph of *soboro* of Example 1, produced from a minced Southern blue whiting meat as the raw material (a tray in the photograph has an external size of 8 cm × 8 cm).

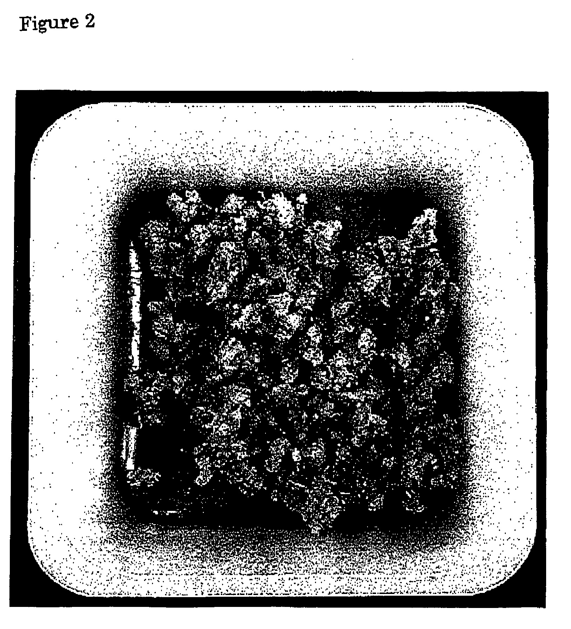

Fig. 2 is a photograph of *soboro* of Example 2, produced from ground Alaska pollack as the raw material (a tray in the photograph has an external size of 8 cm × 8 cm).

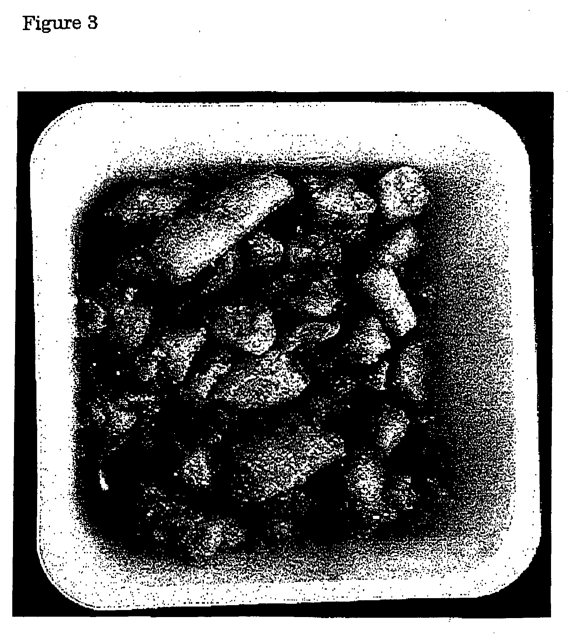

Fig. 3 is a photograph of *soboro* of Comparative Example, produced from a thawed minced Southern blue whiting meat as the raw material (a tray in the photograph has an external size of 8 cm × 8 cm).

## Claims

1. A minced and heated fish meat material having a texture like meat of livestock, in which frozen fish meat is chopped or crushed fine-grainedly while keeping a frozen state, and the fish meat is heated in a frozen state until a protein is denatured and coagulated.

2. The minced and heated fish meat material having a texture like meat of livestock according to claim 1, wherein the seasoning is carried out simultaneously with the heating.

3. The minced and heated fish meat material having a texture like meat of livestock according to claim 1 or 2, wherein the frozen fish meat is *surimi* or minced fish meat.

4. The minced and heated fish meat material having a texture like meat of livestock according to claim 3, wherein decomposition of trimethylamine N-oxide is suppressed in the minced fish meat.

5. The minced and heated fish meat material having a texture like meat of livestock according to claim 4, wherein the decomposition of trimethylamine N-oxide is suppressed in the minced fish meat by agitation with addition of sugar.

6. A processed food produced by using the minced and heated fish meat material having a texture like meat of livestock according to any one of claims 1 to 5 as a raw material.

7. A process for producing a minced and heated fish meat material having a texture like meat of livestock, which comprises chopping or crushing frozen fish meat fine-grainedly while keeping a frozen state, and heating the fish meat in a frozen state until a protein is denatured and coagulated.

8. The process for producing the minced and heated fish meat material having a texture like meat of livestock according to claim 7, wherein the seasoning is carried out simultaneously with the heating.

9. The process for producing the minced and heated fish meat material having a texture like meat of livestock according to claim 7 or 8, wherein the frozen fish meat is *surimi* or minced fish meat.

10. The process for producing the minced and heated fish meat material having a texture like meat of livestock according to claim 9, wherein decomposition of trimethylamine N-oxide is suppressed in the minced fish meat.

11. The process for producing the minced and heated fish meat material having a texture like meat of livestock according to claim 10, wherein the decomposition of trimethylamine N-oxide is suppressed in the minced fish meat by agitation with addition of sugar.
